# EUROPEAN PATENT APPLICATION

(11) **EP 3 264 689 A1**
(43) Date of publication of application: **03.01.2018**
(21) Application number: 15883231.1
(22) Date of filing: 27.02.2015
(51) Int. Cl.: H04L 12/44

(54) **ROUTER**

(71) Applicant: Liverock Technologies Inc., Tokyo 160-0022 (JP)
(72) Inventor: KOJIMA Osamu, Tokyo 160-0022 (JP)
(74) Representative: Grünecker Patent- und Rechtsanwälte PartG mbB
(86) International application number: PCT/JP2015/055767
(87) International publication number: WO 2016/135937

(57) **Abstract**

A router 100 of the present invention comprises: a wireless WAN communication unit 109 which communicates with a device connected to a WAN; a wired LAN communication/power supply unit 111 which communicates with a PoE-enabled camera 300 that is connected by a LAN cable to a LAN, and which supplies power via the LAN cable to the PoE-enabled camera 300; and a main control unit 101 which controls a restart of the PoE-enabled camera 300 if the PoE-enabled camera 300 is in an unresponsive state.

## Description

### Technical Field

The present invention relates to a router, and more particularly to a router for communicating with a device connected to a WAN (Wide Area Network).

### Background Art

Conventionally, PoE (Power over Ethernet (Trade Mark)) -enabled devices, for example, have been controlled by a server on a cloud via a router.

### Citation List

### Patent Literature

PTL 1: Japanese Unexamined Patent Application Publication No. 2009-165310

### Summary of Invention

### Technical Problem

However, if the PoE-enabled device become unresponsive due to a freeze, a hang-up or the like, and then communications between the server in the cloud and the PoE-enabled device are impossible, there is a problem that the PoE-enabled device cannot be operated stably.

An object of the present invention is to provide a router that can operate the PoE-enabled device stably. Solution to Problem

To achieve the above object, according to one aspect of the present invention, a router comprises a WAN communication unit communicating with a device connected to a WAN, a wired LAN communication unit communicating with a PoE-enabled device connected to a LAN by a LAN cable, a power supply unit supplying power to the PoE-enabled device via the LAN cable, and a control unit controlling a restart of the PoE-enabled device if the PoE-enabled device is in an unresponsive state.

In the above-described router according to the present invention, the WAN communication unit communicates by wireless with the device connected to the WAN.

In the above-described router according to the present invention, the control unit controls the restart of the PoE-enabled device by having the power supply unit execute a control for stopping a supply of power to the PoE-enabled device and thereafter starting the supply of power.

In the above-described router according to the present invention further comprises a storage unit storing an operation schedule for the PoE-enabled device, wherein the control unit controls the PoE-enabled device based on the operation schedule.

In the above-described router according to the present invention, in a case where the power is supplied from a secondary battery which is installed outside, the control unit senses a remaining battery level of the secondary battery and changes the operation schedule according to the remaining battery level.

### Advantageous Effects of Invention

According to the present invention, the PoE-enabled device can be operated stably.

### Brief Description of Drawings

[FIG. 1] FIG. 1 illustrates a configuration of a router 100 according to a first embodiment of the present invention.
[FIG. 2] FIG. 2 illustrates a configuration of a PoE-power by the router 100 according to the first embodiment of the present invention.
[FIG. 3] FIG. 3 is a system configuration diagram illustrating an example of an operating system for a PoE-enabled device using the router 100 according to the first embodiment of the present invention.
[FIG. 4] FIG. 4 is a flow chart illustrating a flow of a main process executed by a main control unit of the router 100 according to the first embodiment of the present invention.
[FIG. 5] FIG. 5 is a flow chart illustrating a flow of a PoE-enabled device control process executed by the main control unit of the router 100 according to the first embodiment of the present invention.
[FIG. 6] FIG. 6 is a flow chart illustrating a flow of life-and-death determination/return process in the main control unit of the router 100 according to the first embodiment of the present invention.
[FIG. 7] FIG. 7 is a flow chart illustrating the flow of life-and-death determination/return process in the main control unit of the router 100 according to the first embodiment of the present invention.
[FIG. 8] FIG. 8 illustrates a configuration of a router 700 according to a second embodiment of the present invention.
[FIG. 9] FIG. 9 is a flow chart illustrating a flow of a main process executed by a main control unit of the router 700 according to the second embodiment of the present invention.
[FIG. 10] FIG. 10 is a flow chart illustrating a flow of a secondary battery determination process of the main control unit of the router 700 according to the second embodiment of the present invention.

### Description of Embodiments

### [First Embodiment]

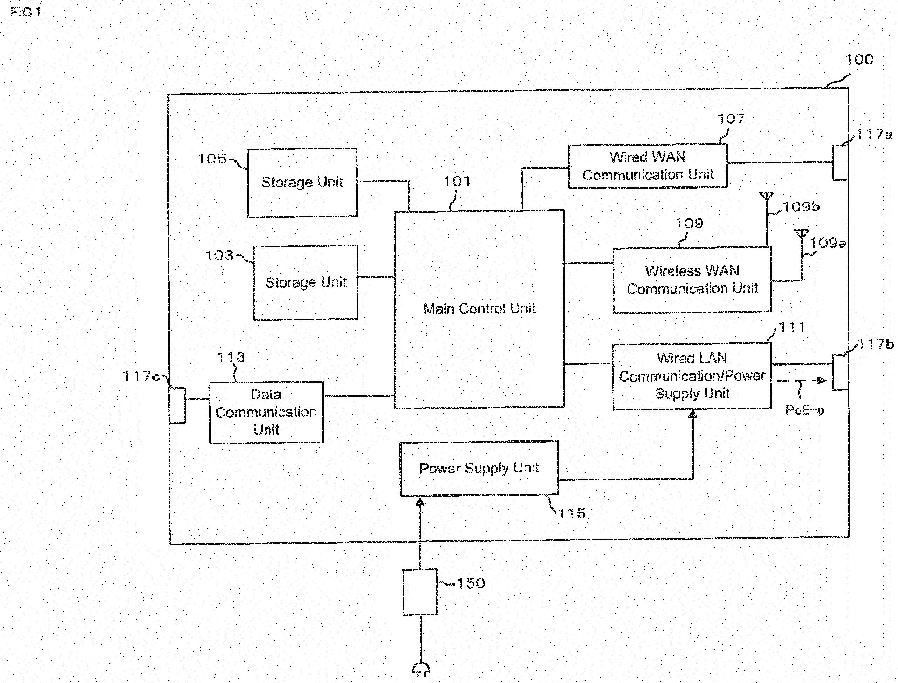

A router 100 according to a first embodiment of the present invention will be described with reference to FIGS. 1 to 7. It should be noted that, in all drawings referred to below, individual components are illustrated in sizes and at relative dimensional ratios, which are set different from actual ones as appropriate for easier understanding.

FIG. 1 is a block diagram illustrating the configuration of the router 100 according to this embodiment. The router 100 includes a main control unit 101 for routing and controlling various electric circuits in the router 100. Also, the router 100 includes a storage unit 103 for storing various control programs and matters necessary for executing the various control programs, and includes a storage unit 105 for storing the transmitted data and the like from a device connected to the router 100 via a LAN (Local Area Network) cable. The device connected to the router 100 via the LAN cable is hereinafter sometimes referred to as "LAN device". The matters necessary for executing the various control programs include, for example, information of an operation schedule and tables of operational conditions for the LAN device, commands for the LAN device and electric power setting matters for the LAN device. The router 100 also includes a wired WAN communication unit 107 which communicates with a device connected to the WAN by wire, a wireless WAN communication unit 109 which communicates with a device connected to the WAN by wireless, and a wired LAN communication/power supply unit 111 which communicates with the LAN device and supplies power to the LAN device by wire if the LAN device is a PoE-enabled device. The router 100 also includes a data communication unit 113 which communicates by wire with a detector (e.g., a detector including an infrared sensor and/or a temperature sensor or the like) . The router 100 also includes a power supply unit 115 which converts the DC voltage obtained from the outside into a predetermined DC voltage, and supplies the predetermined DC voltage to various circuits in the router 100. Further, the router 100 includes various interfaces (WAN interface 117a, LAN interface 117b, DIO interface 117c). Further, in the router 100 of the present embodiment, the LAN interface is provided only one, however, a plurality of LAN interfaces may be provided. In this case, a plurality of wired LAN communication/power supply unit 111 may be provided a same number as a number of the LAN interfaces. Further, the wireless WAN communication unit 109 or the storage unit 105 may in some cases be external to the router 100 via a predetermined interface. The wired WAN communication unit 107 and the wireless WAN communication unit 109 can also communicate with devices connected to networks other than the WAN.

The main control unit 101 includes a CPU, and an internal storage device such as a RAM or the like. The CPU reads and executes various control programs and various setting matters stored in the storage unit 103, thereby the main control unit 101 can control the routing and the LAN device. Further, if the LAN device is the PoE-enabled device, the main control unit 101 can control a PoE-power (e.g., controlling the PoE-power to the on state or the off state) by controlling the wired LAN communication/power supply unit 111. Further, the main control unit 101 executes the life-and-death monitoring of the PoE-enabled device. If the PoE-enabled device does not respond, the main control unit 101 can control a restart of the PoE-enabled device by sending a reset command to the PoE-enabled device or by changing the PoE-power into the off state first and then changing the PoE-power into the on state.

Operation schedule information of the LAN device stored in the storage unit 103 includes, for example, information on an operational date in a predetermined time period and the start time and the end time in the operational date. Further, an operational condition table stored in the storage unit 103 includes, for example, information of the timetable for sending a command from the main control unit 101 to the LAN device, which is coupled with the operation schedule information. The details will be described later.

The wireless WAN communication unit 109 includes an antenna 109a for connecting to the mobile phone communication network (e.g., 3G or 4GLTE), a WiMAX network, or a PHS network or the like. The wireless WAN communication unit 109 can transmit data sent from the main control unit 101 to a server or a terminal provided in the cloud via a base station. Further, the wireless WAN communication unit 109 can receive data transmitted from the server or the terminal provided in the cloud via the base station, and then can send the data to the main control unit 101. Further, the wireless WAN communication unit 109 includes an antenna 109b for receiving radio waves of the GPS (Global Positioning System). The main control unit 101 can derive position information from the GPS radio wave, and can add the position information to the data to be transmitted from the wired WAN communication unit 107 or the wireless WAN communication unit 109. A user or an administrator can easily determine where the received data was sent from by adding the position information to the data to be transmitted from the wireless WAN communication unit 109. Further, the antenna 109b may be provided separately from the wireless WAN communication unit 109.

The wired LAN communication/power supply unit 111 can transmit a command sent from the main control unit 101 to the LAN device and can receive data sent from the LAN device and then transmit the received data to the main control unit 101. Further, the wired LAN communication/power supply unit 111 can output a predetermined voltage made by the power supply unit 115 to a communication line or an empty line in the LAN cable based on the control of the main control unit 101. The details will be described later.

The data communication unit 113 can transmit by wire a command sent from the main control unit 101 to a device (e.g., a detector or a lighting equipment) connected to the DIO interface 117c. The data communication unit 113 can receive data sent from the device and then transmit to the main control unit 101. Further, there is a case where the human sensor is connected to the DIO interface 117c. In this case, when the output voltage of the human sensor exceeds the predetermined threshold, the data communication unit 113 sends the main control unit 101 the predetermined data indicating that a person has been sensed. Further, there is a case where a plurality of DIO interfaces are provided. For example, there may be cases where the human sensor and the lighting equipment are connected to each DIO interface. In this case, based on the output voltage of the human sensor, the main control unit 101 may control the lighting device and the LAN device. Further, the main control unit 101 may execute control of the LAN device based on the data transmitted from the detector and the lighting equipment connected to the DIO interface. Further, the main control unit 101 may execute control of the detector and the lighting equipment connected to the DIO interface based on data transmitted from the LAN device. Further, the detector and the lighting equipment may be connected by wireless to the data communication unit 113.

A predetermined voltage (DC) is supplied to the power supply unit 115 via an AC adapter 150 from an external power source (AC). Further, the power supply unit 115 supplies a predetermined voltage necessary for operation of the various circuits provided in the router 100 and a predetermined voltage necessary for the PoE-power.

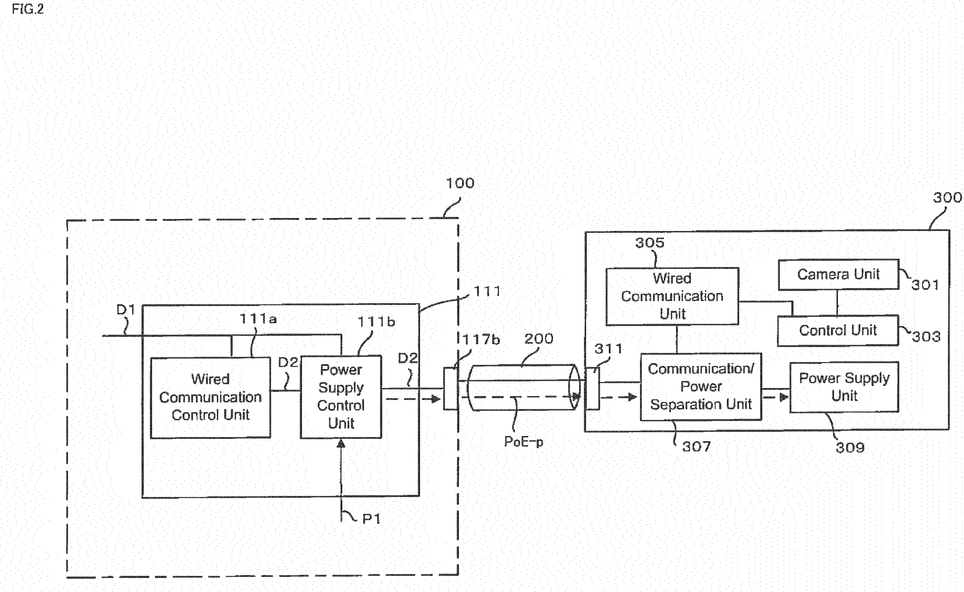

With reference to FIG. 2, a configuration of the PoE-power by the router 100 according to the present embodiment will now be described below. FIG. 2 is a block diagram showing a state in which a PoE-enabled camera 300 is connected to the router 100 via a LAN cable 200. The wired LAN communication/power supply unit 111 of the router 100 includes a wired communication control unit 111a and a power supply control unit 111b for supplying power conformed to a predetermined standard (e.g., IEEE802.3af/IEEE802.3at). The wired communication control unit 111a is connected to the main control unit 101 via the communication line D1. A predetermined voltage is supplied to the power supply control unit 111b via a voltage line P1. The voltage of the voltage line P1 is used to supply to the PoE-enabled camera 300. Further, the power supply control unit 111b is connected to the main control unit 101 via the communication line D1. Therefore, the main control unit 101 controls the power control unit 111b via the communication line D1 and then controls the power supply to the PoE-enabled camera 300.

The power supply control unit 111b outputs a predetermined voltage to the communication line D2 connected to the LAN interface 117b based on the control of the main control unit 101. Further, a predetermined voltage outputted to the communication line D2 is supplied to the PoE-enabled camera 300 via the LAN interface 117a and the LAN cable 200.

The PoE-enabled camera 300 shown in FIG. 2 is operated by the PoE-power as a power source. The PoE-enabled camera 300 includes a camera unit 301 having an imaging function and a control unit 303 that performs overall control. Further, the PoE-enabled camera 300 includes a wired communication unit 305 which communicates via a LAN cable with the device located outside. The PoE-enabled camera 300 includes a communication/power separation unit 307 for separating communication data and power for the PoE-power which are input via the LAN cable. The PoE-enabled camera 300 includes a power supply unit 309. The power supply unit 309 converts a voltage sent from the communication/power separation unit 307 to a predetermined voltage and supplies the predetermined voltage to each section. The PoE-enabled camera 300 includes a LAN interface 311.

Further, in the PoE-enabled camera 300, the control unit 303 is activated automatically by inputting a predetermined voltage to the power supply unit 309 via the LAN cable 200, the LAN interface 311 and the communication/power separation unit 307. Therefore, the router 100 can restart the PoE-enabled camera 300 by changing the PoE-power to the PoE-enabled camera 300 into the off state first and then changing the PoE-power into the on state.

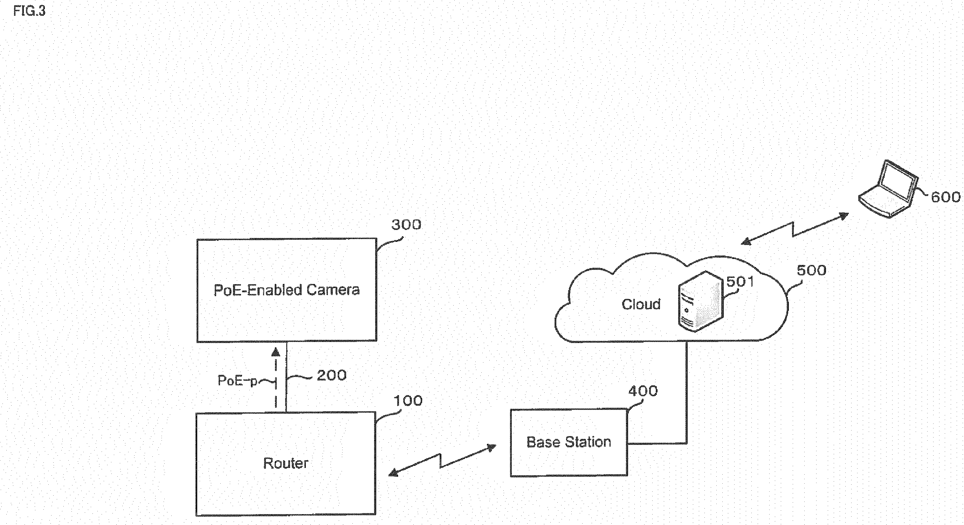

FIG. 3 is a system configuration diagram illustrating an example of an operating system for the PoE-enabled camera 300 using the router 100 according to the present embodiment. The PoE-enabled camera 300 is connected to the router 100 by the LAN cable 200. Further, the router 100 can communicate with a base station 400 using the wireless by the built-in (or external) wireless WAN communication unit 109. Therefore, the router 100 can communicate with a predetermined server 501 (hereinafter, sometimes referred to as "center 501") provided on a cloud 500 or a terminal 600 which is used by a user or an administrator.

The control shown to the above is performed on the PoE-enabled camera 300 based on model number information, rating information, the control programs, the operation schedule information, the operational condition table and command information corresponding to the model number (hereinafter, sometimes collectively referred to as "operational information") stored in the storage unit 103 of the router 100. Further, the operational information is transmitted from the center 501 to the router 100 and then stored in the storage unit 103. The operational information may also be directly transmitted from the terminal 600 to the router 100 without going through the center 501 and then stored in the storage unit 103. Further, the router 100 may make an inquiry to the center 501 at a predetermined frequency (e.g., the frequency of once a day), and the operational information may be transmitted from the center 501 to the router 100 based on the inquiry and then stored in the storage unit 103.

Further, if the command information corresponding to the model number information (the model number of the PoE-enabled camera 300) which is stored in the storage unit 103 is not stored in the storage unit 103, there is a case that the router 100 automatically make an inquiry to the center 501 and then based on the inquiry the center 501 send the command information corresponding to the model number information. Further, the model number information stored in the storage unit 103 may be managed by the user or the administrator via the center 501 or the terminal 600. Further, the model number information stored in the storage unit 103 may also be managed by the router 100 which guesses automatically the model number of the camera. For example, the router 100 transmits several commands (e.g., a command requesting the current time and/or a command requesting the camera model information) corresponding to a certain model number (e.g., model number x) to the camera and analyzes the response contents from the camera thereby guessing the model number of the connected camera. If the response contents do not correspond to the transmitted commands or there is no response, the router 100 judges the model number of the connected camera is not the model number x. By executing the above-mentioned process to all the model numbers stored in the storage unit 103, the router 100 guesses the camera's model number. Further, the model number information stored in the storage unit 103 may be managed by the center 501 or the terminal 600 which guesses automatically the model number of the camera. In this case, in the process described above, the router 100 transmits the commands sent to the camera and the response contents from the camera to the center 501 or the terminal 600 at any time or collectively, and then the center 501 or the terminal 600 analyzes the response contents or the like thereby guessing the camera's model number. By this analysis, there is a case that the center 501 or the terminal 600 determines that there is no command information corresponding to the model number of the connected camera in the storage unit 103 of the router 100. In this case, in the process described above, the center 501 or the terminal 600 transmits the commands not on the router 100 to the camera, then analyzes the response contents thereby guessing the camera's model number. Further, the center 501 or the terminal 600 replaces the model number information stored in the storage unit 103 of the router 100 with the guessed model number information, then stores the command information corresponding to the model number information in the storage unit 103 of the router 100.

The router 100 transmits images captured by the PoE-enabled camera 300 to the center 501. The user or the administrator can check the images stored in the center 501 by operating the terminal 600. The router 100 may communicate with the center 501 or the terminal 600 via the wired WAN communication unit 107. The present system may not be used one of the center 501 or the terminal 600.

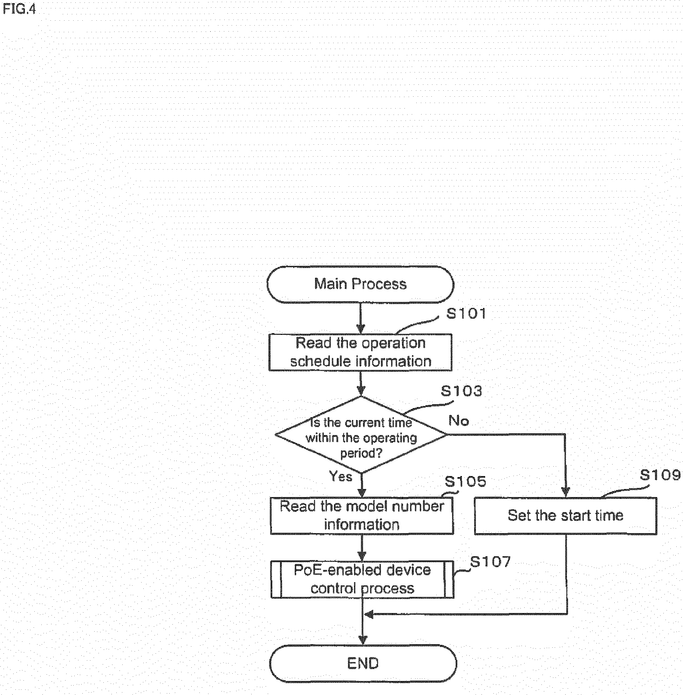

FIG. 4 is a flow chart showing a flow of a main process of the main control unit 101 of the router 100 in the system shown in FIG. 3. The main process may be initiated on the basis of the start time stored in the RAM of the main control unit 101 or may be initiated at the time of startup of the main control unit 101. In step S101, the main control unit 101 reads the operation schedule information stored in the storage unit 103. The operation schedule information includes information such as the operation start time and end time and operational conditions table number of the PoE-enabled camera 300. In step S103 subsequent to step S101, the main control unit 101 determines whether the current time is within an operating period of the PoE-enabled camera 300 based on the operation schedule information read by the main control unit 101. If the current time is within the operating period, the main control unit 101 reads the model number information (model number of the PoE-enabled camera 300) stored in the storage unit 103 (step S105). Next, in step S107, the main control unit 101 executes a PoE-enabled device control process, and ends the main process after the PoE-enabled device control process. Further, if the main process is started outside the operating period on the ground that the main control unit 101 was restarted outside the operating period, the main control unit 101 executes a start time setting process in step S109 since the current time is outside of the operating period. In the process of step S109, if the current time is before a today's operation start time, the today's operation start time is stored in the RAM as the start time. If the current time is after a today's operation end time, a next day's operation start time is stored in the RAM as the start time. After the process in step S109, the main control unit 101 finishes the main process. Further, after the completion of the main process, the router 100 may move to a sleep mode or a low power mode until the start time. Further, the main control unit 101 interrupts the main process when receiving a command for directly controlling the PoE-enabled camera from the center 501 or the terminal 600 even while the main process is being executed. Therefore, even when the router 100 is controlling the PoE-enabled camera 300, the center 501 or the terminal 600 is possible to preferentially control the PoE-enabled camera. Incidentally, although the operation schedule information in the present embodiment includes the operation start time and end time and the operational condition table number of the PoE-enabled camera 300, it is not necessarily limited thereto. The operation schedule information may not include the operation start time and end time and the operational condition table number of the PoE-enabled camera 300, may also have information other than these. This also applies to the operational condition table described later.

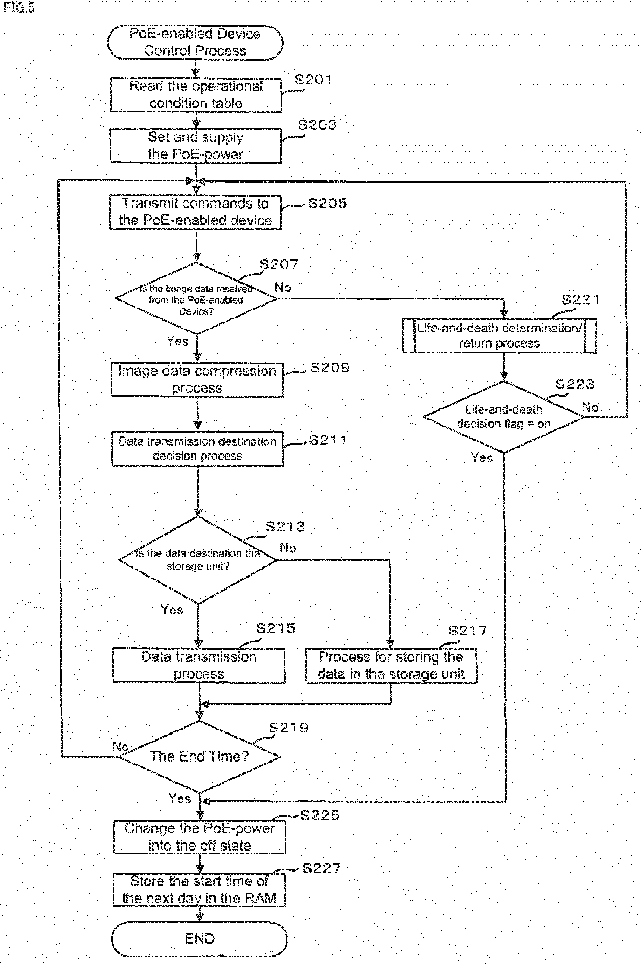

FIG. 5 is a flow chart showing a flow of a PoE-enabled device control process in step S107 shown in FIG. 4. In step S201, the main control unit 101 reads the operational condition table that is linked to the operation schedule information from the storage unit 103. The operational condition table includes the items necessary for the PoE-enabled device control process. For example, the operational condition table includes information of various settings matter of the PoE-enabled camera 300, a time table for sending commands to the PoE-enabled camera 300, the compression ratio for compressing the image data sent from the PoE-enabled camera 300 and data transmission destination address of the image data and the like. In step S203 subsequent to step S201, the main control unit 101 controls the wired LAN communication/power supply unit 111, and executes control for supplying a predetermined power to the PoE-enabled camera 300. Further, the main control unit 101 transmits a predetermined command to the PoE-enabled camera 300 by controlling the wired LAN communication/power supply unit 111, and sets the PoE-enabled camera 300 based on the model number information of the PoE-enabled camera 300, command information corresponding to the model number information and various setting matters for the PoE-enabled camera 300 in the operational condition table read from the storage unit 103.

In step S205 subsequent to step S203, the main control unit 101 transmits a predetermined command (e.g., an image data requesting command for one picture) to the PoE-enabled camera 300 by controlling the wired LAN communication/power supply unit 111 based on the time table in the operational condition table read from the storage unit 103. In step S207 subsequent to step S205, the main control unit 101 determines whether the requested image data was received from the PoE-enabled camera 300 within a predetermined time. In step S207, if the main control unit 101 determines that the requested image data was received from the PoE-enabled camera 300 within the predetermined time, the main control unit 101 executes a process of step S209. In step S209, the main control unit 101 compresses the received image data based on an image compression ratio in the operational condition table. The main control unit 101 may also compress the received image data based on the image compression ratio corresponding to the radio wave receiving condition at the antenna 109a of the wireless WAN communication unit 109.

In step S211 subsequent to step S209, the main control unit 101 executes the data transmission destination decision process. In the data transmission destination decision process, the main control unit 101 decides to transmit the image data to the data transmission destination address in the operational conditions table or store the image data in the storage unit 105 based on the radio wave receiving state at the antenna 109a of the wireless WAN communication unit 109. For example, in a case where it is desired to collectively transmit a plurality of image data in a time zone in which the communication fee becomes cheap, the main control unit 101 may decide to store the image data in the storage unit 105 regardless of the radio wave reception state of the antenna 109a. Further, for example, when the data communication amount has exceeded or is likely to exceed a predetermined upper limit, the main control unit 101 may decide to store the image data in the storage unit 105 regardless of the radio wave receiving state of the antenna 109a. Further, the main control unit 101 may transmit the image data stored in the storage unit 105 automatically based on another control program. The main control unit 101 may also transmit the image data stored in the storage unit 105 based on a request from the center 501 or the terminal 600.

In step S213 subsequent to step S211, the main control unit 101 determines whether the transmission destination of the image data is the data transmission destination address in the operational condition table based on the result of step S211. When transmitting image data to the data destination address in the operational condition table, the main control unit 101 executes a data transmission process (step S215). In the data transmission process, the main control unit 101 executes process (e.g., a process for dividing the image data into a plurality of packets or a process for applying an IP address corresponding to the data transmission destination address to the plurality of packets) for transmitting the image data compressed in step S209. The main control unit 101 also controls the wireless WAN communication unit 109 and transmits the image data to the destination address. The main control unit 101 also may give the position information of the GPS indicated in the above to the packets or the image data to be transmitted. In step S211, if the main control unit 101 decides to store the compressed image data in the storage unit 105, the main control unit 101 stores the compressed image data in the storage unit 105 (step S217).

In step S219 subsequent to step S215 or S217, the main control unit 101 determines whether the current time has passed the end time based on the operation schedule information. If the current time is before the end time, the main control unit 101 returns to step S205 and then executes a process subsequent to step S205. If the current time has passed the end time, the main control unit 101 also executes a process of step S225.

In step S207, when the main control unit 101 determines that the requested image data was not received from the PoE-enabled camera 300 within a predetermined time, the main control unit 101 executes the life-and-death determination/return process in step S221 (details will be described later). In step S223 subsequent to step S221, the main control unit 101 determines whether a life-and-death decision flag is on or off based on the process of step S221. In case the life-and-death decision flag is off, the main control unit 101 determines the PoE-enabled camera 300 is in a responsive state and executes the process in step S205. In case the life-and-death decision flag is on, the main control unit 101 determines the PoE-enabled camera 300 is not in the responsive state and executes the process in step S225.

In step S225, the main control unit 101 controls the wired LAN communication/power supply unit 111 and changes the PoE-power into the off state. In step S227 subsequent to step S225, the main control unit 101 stores the start time of the next day in the RAM and ends the PoE-enabled device control process based on the operation schedule information.

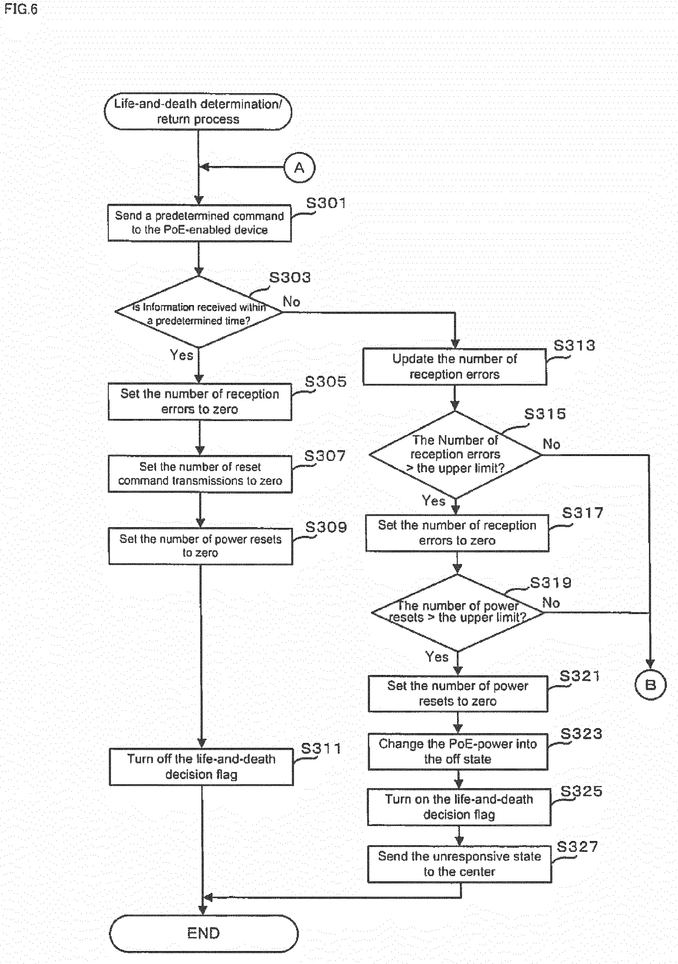

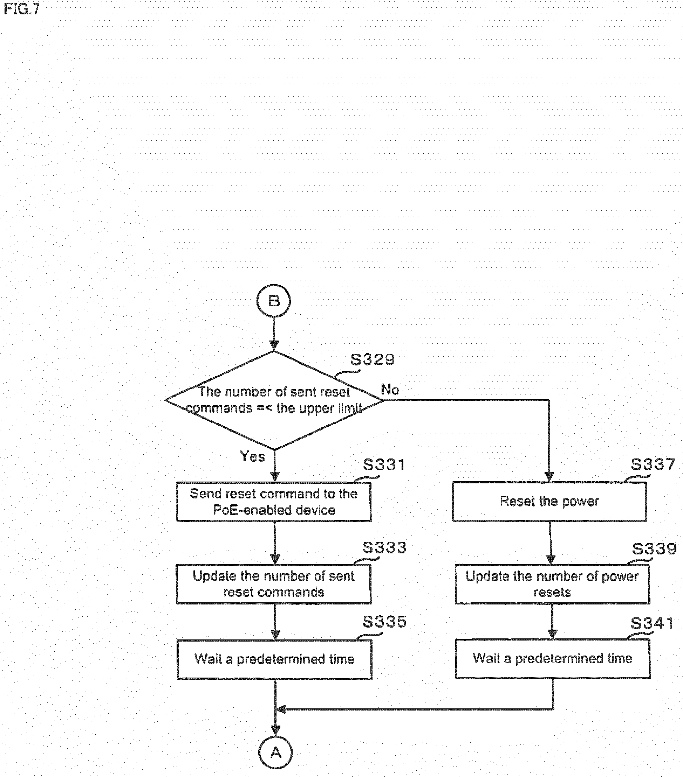

FIGS. 6 and 7 are flow charts showing a flow of a life-and-death determination/return process in step S221 shown in FIG. 5. FIG. 6 shows the flow of the life-and-death determination process for the PoE-enabled camera 300. FIG. 7 shows the flow of the process to return the PoE-enabled camera 300 from the unresponsive state.

In step S301, the main control unit 101 sends a predetermined command to the PoE-enabled camera 300. In step S303 subsequent to step S301, the main control unit 101 determines whether a predetermined information is received from the PoE-enabled camera 300 within a predetermined time. In case the predetermined information is received from the PoE-enabled camera 300 within the predetermined time, the main control unit 101 sets a number of reception errors to zero (step S305), sets a number of reset command transmissions to zero (step S307), sets a number of power resets to zero (step S309) and sets the life-and-death decision flag to turn off (step S311), and then ends the life-and-death decision/return process.

In step S303, in case the main control unit 101 determines the predetermined information is not received from the PoE-enabled camera 300 within the predetermined time, the main control unit 101 executes the process of updating the number of reception errors (step S313). In step S315 subsequent to step S313, the main control unit 101 determines whether the number of reception errors is larger than an upper limit of reception errors in the operational condition table. If the number of reception errors is greater than the upper limit of reception errors, the main control unit 101 sets the number of reception errors to zero (step S317). Further, when the number of reception errors is less than the upper limit of reception errors, the main control unit 101 executes the process of step S329 shown in FIG. 7.

In step S319 subsequent to step S317, based on an upper limit of power resets in the operational condition table, the main control unit 101 determines whether the number of power resets is greater than the upper limit of power resets. If the number of power resets is greater than the upper limit of power resets, the main control unit 101 abandons the returning process to the PoE-enabled camera 300, sets the number of power resets to zero (step S321) and then executes the process for changing the PoE-power into the off state (step S323) . Next, the main control unit 101 turns on the life-and-death decision flag (step S325), sends the center 501 that the PoE-enabled camera 300 is the unresponsive state (step S327) and then ends the life-and-death decision/return process. Further, in step S319, if the number of power resets is not more than the upper limit of power resets, the main control unit 101 executes the process of step S329 shown in FIG. 7.

In step S329 shown in FIG. 7, based on an upper limit of sent reset commands in the operational condition table, the main control unit 101 determines whether a number of sent reset commands is equal to or less than the upper limit of sent reset commands. If the number of sent reset commands is equal to or less than the upper limit of sent reset commands, the main control unit 101 executes a process to send a reset command to the PoE-enabled camera 300 (step S331). Next, the main control unit 101 updates the number of sent reset commands (step S333) and executes a process for awaiting a predetermined time until the restart of the PoE-enabled camera 300 is completed (step S335). Further, after execution of the process of step S335, the main control unit 101 returns to step S301 and executes on and after step S301.

In step S329, if the number of sent reset commands is greater than the upper limit of sent reset commands, the main control unit 101 executes a process of resetting the power of the PoE-enabled camera 300 (step S337). The process of resetting the power of the PoE-enabled camera 300 is executed by the wired LAN communication/power supply unit 111 controlled by the main control unit 101. In the process of resetting the power of the PoE-enabled camera 300, the PoE-power is changed into the off state first, and after an elapse of a certain period of time (e.g., ten seconds) the PoE-power is changed into the on state. Next, the main control unit 101 updates the number of power resets (step S339) and then executes a process to wait a predetermined time until the restart of the PoE-enabled camera 300 is completed (step S341). Further, after execution of the process of step S341, the main control unit 101 returns to step S301 and executes on and after step S301.

In this way, the main control unit 101 of the router 100 performs the life-and-death monitoring of the PoE-enabled camera 300 connected with the router 100 and if the main control unit 101 determines the PoE-enabled camera 300 is in the unresponsive state, the main control unit 101 executes a process for restarting of the PoE-enabled camera 300. Further, since the router 100 includes the wired LAN communication/power supply unit 111 having a PoE-power function, it is possible to stop supplying power and then restart supplying power to the PoE-enabled camera 300. By this, the router 100 can automatically restart the PoE-enabled camera 300 in the unresponsive state and can realize a stable operation of the PoE-enabled camera 300.

The following effects can be obtained by the combination of the router 100 and the PoE-enabled camera 300 according to the present embodiment.
(1) In the case of PoE-enabled camera 300 is hung up, the router 100 can forcibly restart and return the PoE-enabled camera 300 by changing the PoE-power into the off state or the on state.
(2) The router 100 can monitor the condition and execute the settings of the PoE-enabled camera 300 by sending predetermined commands to the PoE-enabled camera 300.
(3) The router 100 can supply power to the PoE-enabled camera 300 during only the scheduled time thereby realizing power saving.
(4) The router 100 can change the shooting mode of the PoE-enabled camera 300, can collect the log of the PoE-enabled camera 300 and can control the start and stop of the shooting or the like.
(5) The router 100 can operate the PoE-enabled camera 300 in various ways. For example, the router 100 can operate to supply power to the PoE-enabled camera 300 from sunrise to sunset. Further, the router 100 can operate to supply power every five minutes to the PoE-enabled camera 300 and to stop the power after the PoE-enabled camera 300 transmits the shooting data. The router 100 can also operate to supply power for five minutes in response to a human sensor or a trigger signal from the external. The power supply time for the PoE-enabled camera 300 can be set variably from the router 100 or the center 501 on the cloud.

Conventionally, it was necessary to monitor the PoE-enabled device to stably operate from a remote location. Therefore, when the PoE-enabled device was frozen, it was necessary to automatically reboot by using a PoE-enabled device which has a watchdog timer function. Alternatively, when the PoE-enabled device was frozen, it was necessary to reboot the PoE-enabled device from the remote location by changing the power supply to the PoE-enabled device from the off state to the on state. In each case, manufacturing cost or operation cost to the PoE-enabled device is increased. According to the router 100 of the present embodiment, there is no need to monitor the PoE- enabled device from the remote location. Further, there is no need to have the watchdog timer function in the PoE-enabled device. According to the router 100, it is possible to reduce the manufacturing cost and the operation cost to the PoE-enabled device. In the case of controlling the supply of power to the PoE-enabled device by the control signal from the remote location, if the network line on the WAN side is interrupted and the control signal cannot reach to the PoE-enabled device, there is a problem that the supply of power to the PoE-enabled device cannot be controlled from the remote location. According to the router 100 of the present embodiment, even if the network line on the WAN side is interrupted, control of the supply of power to the PoE-enabled device is properly carried out.

The router 100 of the present embodiment, for example, may also include an FTP (File Transfer Protocol) function, a function for sending a mail at the time of a camera abnormality and a function for networking such as DDNS (Dynamic Domain Name System) function provided generally in an IP camera. The router 100 can perform an operation which is equal to or higher than that of the IP camera which has the above-mentioned functions to an inexpensive IP camera and a non-IP camera that they do not have the above-mentioned functions, thereby reducing overall operational costs. Further, there is also an effect that the development cost and the manufacturing cost for the IP camera can be reduced by providing the router 100 with functions concerning networking for the IP camera. The router 100 may also be provided with the function of the NVR (Network Video Recorder). Therefore, a large-scale server corresponding to the NVR is not required, and there is a merit that it is easy to build and manage the system.

### [Second Embodiment]

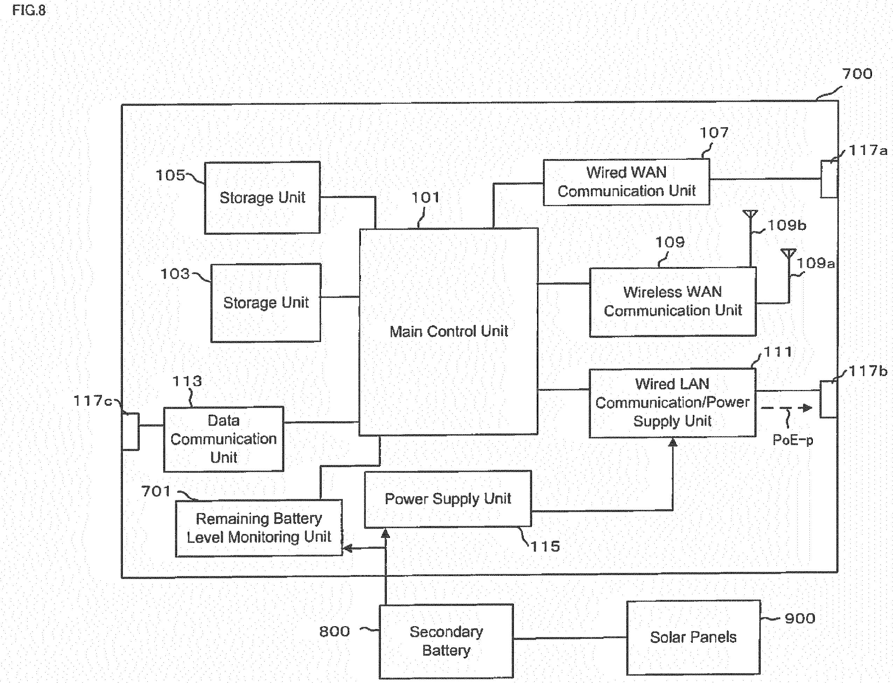

A router 700 according to a second embodiment of the present invention will be described with reference to FIGS. 8 to 10. FIG. 8 is a block diagram illustrating a configuration of the router 700 according to the present embodiment. In FIG. 8, the same reference numeral is given to the same configuration as the configuration of the router 100 shown in FIG. 1 and the description thereof may be omitted.

A predetermined power is supplied from a secondary battery 800 which is placed outside to a power supply unit 115 of the router 700. The secondary battery 800 is charged by power generated at solar panels 900 which are placed outside. The router 700 includes a remaining battery level monitoring unit 701 that monitors the remaining battery level of the secondary battery 800. The remaining battery level monitoring unit 701 includes a voltmeter for measuring the output voltage of the secondary battery 800. The remaining battery level monitoring unit 701 can send the measurement value of the output voltage of the secondary battery 800 to the main control unit 101 based on commands sent from the main control unit 101. The main control unit 101 can control the LAN-device based on the measurement values of the output voltage of the secondary battery 800. The remaining battery level monitoring unit 701 may include an ammeter in place of the voltmeter. In this case, the remaining battery level monitoring unit 701 measures the output current of the secondary battery 800, thereby the main control unit 101 senses the battery remaining amount of the secondary battery 800. The battery remaining amount of the secondary battery 800 may be sensed by the main control unit 101 only. In this case, the main control unit 101 senses the battery remaining amount of the secondary battery 800 based on the amount of power generated at the solar panels which was inferred from the daylight hours and the rated output of the solar panels or the like, and based on the operating time of the router 700 and the LAN-device. Further, a plurality of operation schedule information corresponding to the battery remaining amount of the secondary battery 800 is stored in the storage unit 103 of the router 700. Therefore, the main control unit 101 can control the LAN-device based on the operation schedule corresponding to the battery remaining amount of the secondary battery 800.

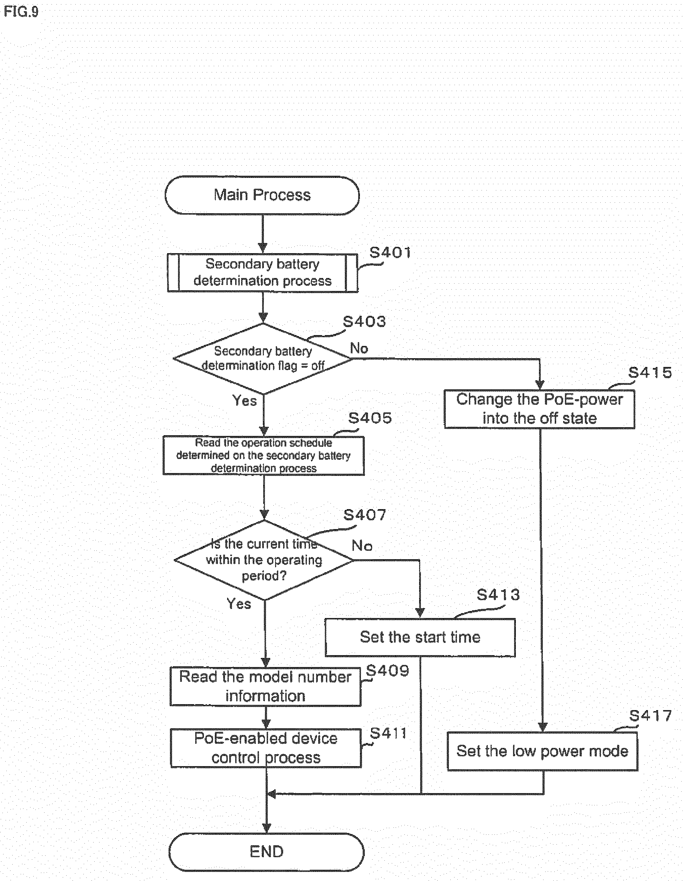

In this embodiment, the router 700 is used instead of the router 100 in the system shown in FIG. 3. Further, the secondary battery 800 and the solar panels 900 are used as a power source for the router 700. FIG. 9 is a flow chart showing a flow of a main process of the main control unit 101 of the router 700. The main process may be started at the start time stored in the RAM in the main control unit 101. The main process may also be started at startup of the main control unit 101. Further, the main process may be started based on a predetermined schedule (e.g., frequency of once per hour). In step S401, the main control unit 101 executes a secondary battery determination process (details will be described later). In step S403 subsequent to step S401, the main control unit 101 determines whether a secondary battery determination flag which is set by the process of step S401 is on or off. If the secondary battery determination flag is off, the main control unit 101 reads the operation schedule information from the storage unit 103 which is determined on the secondary battery determination process (step S405). Step S407 is the same as step S103 shown in FIG. 4, step S409 is the same as step S105 shown in FIG. 4, step S411 is the same as step S107 shown in FIG. 4 and step S413 is the same as step S109 shown in FIG. 4. Therefore, descriptions of the process of steps S407-S413 are omitted.

In step S403, if the secondary battery determination flag is on, the main control unit 101 determines that it is impossible to operate the PoE-enabled camera 300 with the battery remaining amount of the secondary battery 800 and then executes the process for changing the POE-power into the off state (step S415). Then, the main control unit 101 executes the process of setting the router 700 to the low power mode (step S417), and ends the main process.

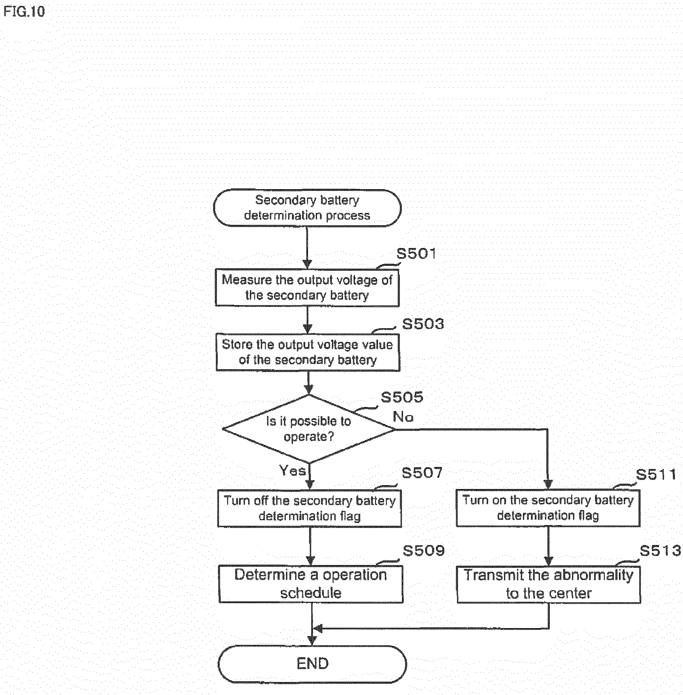

FIG. 10 is a flow chart showing a flow of the secondary battery determination process in step S401 shown in FIG. 9. In step S501, the main control unit 101 executes the output voltage measurement process for the secondary battery. In the output voltage measurement process for the secondary battery, the main control unit 101 measures the output voltage of the secondary battery 800 by controlling the remaining battery level monitoring unit 701. In step S503 subsequent to step S501, the main control unit 101 stores the output voltage value of the secondary battery 800 sent from the remaining battery level monitoring unit 701 in the storage unit 105. In step S505 subsequent to step S503, the main control unit 101 determines whether the PoE-enabled camera 300 can be operated or not based on the output voltage value of the secondary battery 800. For example, the main control unit 101 determines that it is impossible to operate the PoE-enabled camera 300 when the output voltage value of the secondary battery 800 is below the predetermined voltage value or is rapidly decreased. In step S505, if the main control unit 101 determines that it is possible to operate the PoE-enabled camera 300, the main control unit 101 turns off the secondary battery determination flag (step S507), determines the operation schedule (step S509), and ends the secondary battery determination process. In step S509, the main control unit 101 determines a operation schedule information corresponding to the output voltage value of the secondary battery 800 from a plurality of operation schedule information stored in the storage unit 103. In step S505, if the main control unit 101 determines that it is impossible to operate the PoE-enabled camera 300, the main control unit 101 turns on the secondary battery determination flag (step S511), transmits the abnormality to the center (step S513), and ends the secondary battery determination process.

In case the secondary battery 800 installed outside is used as the power source of the router 700, the main control unit 101 of the router 700 senses the battery remaining amount of the secondary battery 800 and changes the operation schedule of the PoE-enabled camera 300 according to the battery remaining amount of the secondary battery 800. Therefore, even when the secondary battery is used as the power source, the router 700 can operate the PoE-enabled camera 300 stably.

The following effects can be obtained by the combination of the router 700, the PoE-enabled camera 300 and the secondary battery 800 according to the present embodiment.
(1) In case the router 700 determines the charge of the secondary battery 800 is a good state, the router 700 controls the PoE-enabled camera 300 so as to shoot in the ordinary schedule (e.g., a schedule for the shooting of one minute every hour from seven o'clock in the morning until eighteen o'clock in the evening).
(2) In case the router 700 determines the charge of the secondary battery 800 is a bad state, the router 700 controls the PoE-enabled camera 300 so as to shoot in the power-saving mode schedule (e.g., a schedule for the shooting of thirty seconds every three hours from seven o'clock in the morning until eighteen o'clock in the evening).
(3) The router 700 can sense the consumption degree of the secondary battery 800 based on the log information on an output voltage value of the secondary battery 800.
(4) The router 700 can send an alert when the router 700 has measured an abrupt voltage drop of the output voltage value of the secondary battery 800.
(5) The router 700 can send an alert when the output voltage of the secondary battery 800 does not increase despite the solar panels has been connected to the secondary battery 800 during the day.
(6) When the router 700 intends to communicate with the center, even if any problem is occurred and it becomes impossible to communicate with the center via the wired WAN communication unit 107, the router 700 can send data and alerts to the center via the wireless WAN communication unit 109.

A monitoring device for monitoring the secondary battery, a PoE-power device and a device for controlling these devices are needed in the conventional operation of the PoE-device using the secondary battery as the power source. The router 700 according to the present embodiment can assume all the functions of these devices described above. Therefore, since the number of devices is reduced, the production cost and the operation cost become cheaper and overall power consumption is also reduced.

Technical features (configuration requirements) described in each of the above embodiments are combinable with each other. It is possible to form new technical features by combining the technical features. The PoE-enabled devices applicable to each of the embodiments described above include not only the PoE-compatible camera but also all PoE-compatible devices such as PoE-enabled IP phones, payment terminals, POSs, personal computers, PLCs, sensor units and the like.

The present invention is not limited to the above embodiments, and the present invention can be variously modified.

While the above embodiments are described in connection with the router to which the PoE-enabled device is connected as one example of the router, the present invention is not limited to that example and is applicable to a router to which the network device other than the PoE-enabled device can be connected (e.g., USB connection) or a network device which includes the PoE-power unit and a router function unit as well. The above-described embodiments are the preferred example of the present invention and various technically preferable limitations are imposed in the foregoing description. The scope of the present invention is not to be unduly limited by the foregoing description. Not all the configurations described in each of the above embodiments are necessarily essential elements of the present invention.

### Industrial Applicability

The present invention can be widely utilized in the router that is connected to various network devices. Reference Signs List

100, 700 router
101 main control unit
103, 105 storage unit
107 wired WAN communication unit
109 wireless WAN communication unit
111 wired LAN communication/power supply unit
113 data communication unit
115 power supply unit
200 LAN cable
300 PoE-enabled camera
400 base station
500 cloud
501 center
600 terminal
701 remaining battery level monitoring unit

## Claims

1. A router, comprising:
a WAN communication unit communicating with a device connected to a WAN;
a wired LAN communication unit communicating with a PoE-enabled device connected to a LAN by a LAN cable;
a power supply unit supplying power to the PoE-enabled device via the LAN cable; and
a control unit controlling a restart of the PoE-enabled device if the PoE-enabled device is in an unresponsive state.

2. The router according to Claim 1,
wherein the WAN communication unit communicates by wireless with the device connected to the WAN.

3. The router according to Claim 1 or 2,
wherein the control unit controls the restart of the PoE-enabled device by having the power supply unit execute a control for stopping a supply of power to the PoE-enabled device and thereafter starting the supply of power.

4. The router according to any one of Claims 1 to 3,
further comprising a storage unit storing an operation schedule for the PoE-enabled device,
wherein the control unit controls the PoE-enabled device based on the operation schedule.

5. The router according to Claim 4,
wherein in a case where the power is supplied from a secondary battery which is installed outside, the control unit senses a remaining battery level of the secondary battery and changes the operation schedule according to the remaining battery level.
